# EUROPÄISCHE PATENTSCHRIFT

(11) **EP 3 612 432 B1**
(45) Veröffentlichungstag und Bekanntmachung des Hinweises auf die Patenterteilung: **09.11.2022**
(21) Anmeldenummer: 18719799.1
(22) Anmeldetag: 16.04.2018
(51) Int. Cl.: B62D 1/181, F16H 57/039

(54) **VERSTELLANTRIEB FÜR EINE LENKSÄULE, ANTRIEBSEINHEIT FÜR EINEN VERSTELLANTRIEB, MOTORISCH VERSTELLBARE LENKSÄULE FÜR EIN KRAFTFAHRZEUG UND VERFAHREN ZUR HERSTELLUNG EINES VERSTELLANTRIEBS FÜR EINE LENKSÄULE**
ADJUSTMENT DRIVE FOR A STEERING COLUMN, DRIVE UNIT FOR AN ADJUSTMENT DRIVE, MOTOR-ADJUSTABLE STEERING COLUMN FOR A MOTOR VEHICLE, AND METHOD FOR PRODUCING AN ADJUSTMENT DRIVE FOR A STEERING COLUMN
ENTRAÎNEMENT DE RÉGLAGE POUR UNE COLONNE DE DIRECTION, UNITÉ D'ENTRAÎNEMENT POUR UN ENTRAÎNEMENT DE RÉGLAGE, COLONNE DE DIRECTION À RÉGLAGE MOTORISÉ POUR UN VÉHICULE AUTOMOBILE ET PROCÉDÉ DE FABRICATION D'UN ENTRAÎNEMENT DE RÉGLAGE POUR UNE COLONNE DE DIRECTION

(30) Priorität: 19.04.2017 DE 102017206551
(43) Veröffentlichungstag der Anmeldung: 26.02.2020
(73) Patentinhaber: thyssenkrupp Presta AG, 9492 Eschen (LI); thyssenkrupp AG, 45143 Essen (DE)
(72) Erfinder: SCHACHT, Arne, A-6800 Feldkirch (AT); HUBER, Sebastian, 6811 Göfis (AT); SPECHT, Jean-Pierre, 9469 Haag (CH)
(74) Vertreter: thyssenkrupp Intellectual Property GmbH
(86) Internationale Anmeldenummer: PCT/EP2018/059684
(87) Internationale Veröffentlichungsnummer: WO 2018/192880

(56) Entgegenhaltungen:
- EP-A1- 1 977 866
- DE-A1-102014 104 362
- DE-U1-202008 014 088

## Beschreibung

### Stand der Technik

Die Erfindung betrifft einen Verstellantrieb für eine motorisch verstellbare Lenksäule für ein Kraftfahrzeug, umfassend eine Antriebseinheit mit einem Getriebe, in dem ein um eine Antriebsachse drehend antreibbares Antriebsrad gelagert ist, welches in Wirkeingriff steht mit einem Getrieberad, welches um eine Getriebeachse drehbar in dem Getriebe gelagert ist, wobei das Getriebe zusammengesetzt ist aus einer Antriebsbaugruppe, die das Antriebsrad aufweist, und einer Getriebebaugruppe, die das Getrieberad aufweist, wobei die Antriebsbaugruppe und die Getriebebaugruppe durch eine Fügeverbindung miteinander verbunden sind. Eine Antriebseinheit für einen derartigen Verstellantrieb, eine motorisch verstellbare Lenksäule für ein Kraftfahrzeug mit einem Verstellantrieb sowie ein Verfahren zur Herstellung eines Verstellantriebs sind ebenfalls Gegenstand der Erfindung.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Mantel-einheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Stellmotor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um eine Achse, nämlich die Gewindespindelachse, drehend antreibbar, wodurch die Gewindespindel und die Spindelmutter je nach Drehrichtung in Richtung der Gewindespindelachse translatorisch aufeinander zu oder voneinander weg bewegt werden können. In einer Ausführungsform ist die Gewindespindel von der Antriebseinheit, die feststehend mit der Stelleinheit oder der Trageinheit verbunden ist, um ihre Gewindespindelachse drehend antreibbar und greift in die Spindelmutter ein, die an der Trageinheit oder alternativ an der Stelleinheit bezüglich Drehung um die Gewindespindelachse feststehend angebracht ist. In Richtung der Gewindespindelachse stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel eine translatorische Verstellung von Trageinheit und Stelleinheit relativ zueinander in Richtung der Gewindespindelachse bewirkt. Diese Ausführung wird daher auch als Rotationsspindelantrieb bezeichnet.

In einer alternativen Ausführungsform ist die Gewindespindel bezüglich Drehung um ihre Gewindespindelachse unverdrehbar mit der Trageinheit oder alternativ mit der Stelleinheit gekoppelt und die Spindelmutter ist drehbar, aber in Richtung der Gewindespindelachse feststehend entsprechend an der Stelleinheit oder alternativ an der Trageinheit gelagert. Wie in der ersten Ausführungsform stützt sich in Richtung der Gewindespindelachse die Gewindespindel an der Trageinheit oder an der Stelleinheit ab, und die Spindelmutter entsprechend an der Stelleinheit oder an der Trageinheit, so dass die Gewindespindel in Richtung der Gewindespindelachse translatorisch verschiebbar ist, indem die Spindelmutter von der Antriebseinheit um die Gewindespindelachse drehend angetrieben wird. Diese Ausführung wird auch als Tauchspindelantrieb bezeichnet.

Durch den rotatorischen Antrieb der Gewindespindel wird wie bei der ersten Alternative eine translatorische Verstellung von Trageinheit und Stelleinheit relativ zueinander in Richtung der Gewindespindelachse bewirkt. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann.

Zur Realisierung einer Längsverstellung der Stelleinheit in Richtung der Längsachse der Lenkspindel kann ein Spindeltrieb eines Verstellantriebs zwischen der Stelleinheit und einer diese axial längsverschieblich aufnehmenden Manteleinheit, auch Führungskasten oder Kastenschwinge genannt, angeordnet sein, welche mit der Trageinheit verbunden ist, und wobei die Gewindespindelachse im Wesentlichen parallel zur Längsachse ausgerichtet sein kann. Zur Höhenverstellung kann ein Spindeltrieb zwischen der Trageinheit und einer daran höhenverschwenkbar gelagerten Stelleinheit oder Manteleinheit, in der die Stelleinheit aufgenommen ist, angeordnet sein. An einer Lenksäule können eine motorische Längs- und Höhenverstellung einzeln oder in Kombination ausgebildet sein.

Der Antrieb des Spindeltriebs erfolgt von der Antriebseinheit über ein um seine Getriebeachse, die identisch mit der Gewindespindelachse ist, drehend antreibbares Getrieberad, welches je nach Ausführung des Spindeltriebs mit der Spindelmutter oder mit der Gewindespindel drehfest verbunden ist. Das Getrieberad weist beispielsweise einen Verzahnungsabschnitt in Form eines Stirnrads auf, mit einer außen umlaufenden Verzahnung oder Schneckenverzahnung. Der Verzahnungsabschnitt ist in Achsrichtung zwischen zwei koaxial zur Achse umlaufenden, stirnseitigen Lagerflächen angeordnet. Die Lagerflächen sind in einer Lageranordnung zwischen korrespondierenden Außenlagerflächen angeordnet, die feststehend an der Stelleinheit oder der Trageinheit ausgebildet sind, beispielsweise in einem Getriebegehäuse. Dadurch werden die auf das Getrieberad in beiden axialen Richtungen der Gewindespindelachse auf den Spindeltrieb wirkenden Halte- und Verstellkräfte über die Lagerflächen auf die Außenlagerflächen an der Stelleinheit oder der Trageinheit übertragen und das Getrieberad axial abgestützt.

Ein derartiger Verstellantrieb ist beispielsweise aus der DE 10 2014 104 362 A1 bekannt. Dieser weist eine Antriebseinheit mit einem Getriebe auf, in dem ein um eine Antriebsachse von einem elektrischen Stellmotor drehend antreibbares Antriebsrad gelagert ist, welches ein erstes Getriebeglied bildet. Dieses Antriebsrad ist in dem bekannten Beispiel als Schnecke ausgebildet, und steht in Wirkeingriff mit einem Getrieberad, welches in dem Beispiel als korrespondierendes Schneckenrad ausgebildet ist und ein zweites Getriebeglied bildet, das um eine Getriebeachse drehbar in dem Getriebe gelagert ist. Das Getrieberad ist koaxial zur Gewindespindelachse entweder mit der Gewindespindel oder der Spindelmutter verbunden, je nachdem, ob ein Rotationsspindelantrieb oder ein Tauchspindelantrieb realisiert wird.

Das Antriebs- und das Getrieberad sind in Lagern, in der Regel in Wellenlagern, drehbar gelagert, die in einem Getriebegehäuse angebracht sind. Für eine hohe Laufruhe und einen niedrigen Verschleiß ist es erforderlich, dass die Lager möglichst exakt im Wirkeingriff von Antriebs- und Getrieberad zueinander positioniert sind. Bei Zahnrädern muss der Abstand möglichst genau der Summe der Teilkreise der Verzahnungen entsprechen. Abweichungen, die beispielweise durch Fertigungstoleranzen bedingt sind, können nicht durch die Positionierung der Lager ausgeglichen werden, so dass beispielsweise federbelastete Andruckvorrichtungen eingesetzt werden, mit denen eine Federkraft auf den Wirkeingriff von Antriebs- und Getrieberad ausgeübt wird. Nachteilig an derartigen Andruckvorrichtungen ist, dass durch die erforderlichen beweglichen Teile ein hoher Fertigungs- und Montageaufwand entsteht und ungünstige, unerwünschte Eigenfrequenzen auftreten können.

Eine Antriebseinheit der eingangs genannten Art ist aus der DE 20 2008 014 088 U1 bekannt. Die Einhaltung der erforderlichen engen Toleranzen bedingt ebenfalls einen hohen Fertigungs- und Montageaufwand.

Angesichts der vorangehend erläuterten Problematik ist es eine Aufgabe der vorliegenden Erfindung, einen Verstellantrieb anzugeben, der verbesserte Betriebseigenschaften bei geringerem Aufwand hat, und eine Lenksäule mit einem verbesserten Verstellantrieb.

### Darstellung der Erfindung

Diese Aufgabe wird gelöst durch einen Verstellantrieb für eine motorisch verstellbare Lenksäule für ein Kraftfahrzeug mit den Merkmalen des Anspruchs 1, eine Antriebseinheit für einen Verstellantrieb gemäß Anspruch 10 und einen Lenksäule mit den Merkmalen des Anspruchs 11.

Ein erfindungsgemäßes Verfahren eines derartigen Verstellantriebs gemäß Anspruch 12 ermöglicht einen geringeren Herstellungsaufwand. Vorteilhafte Weiterbildungen ergeben sich aus den Unteransprüchen.

Zur Lösung der genannten Aufgabe wird für einen Verstellantrieb der eingangs genannten Art vorgeschlagen, dass das Getriebeteilgehäuse zumindest einen zur Getriebeachse koaxialen Rohrabschnitt aufweist, der zumindest über einen Umfangsteilbereich von dem Antriebsteilgehäuse umgriffen ist.

Die Erfindung sieht vor, dass das Getriebeteilgehäuse zumindest einen bevorzugt zylindrischen, zur Getriebeachse koaxialen Rohrabschnitt aufweist, der zumindest über einen Umfangsteilbereich von dem Antriebsteilgehäuse umgriffen ist. In dem Rohrabschnitt ist das Getrieberad koaxial gelagert, und je nach Ausführung des Verstellantriebs mit der Gewindespindel oder der Spindelmutter drehfest verbunden, wobei die Getriebeachse mit der Gewindespindelachse zusammenfällt. Der Rohrabschnitt weist vorzugsweise im Bereich des Getrieberads einen Eingriffsbereich auf, der als Eingriffsöffnung ausgebildet ist, die jeweils über einen Abschnitt in Umfangs- und Achsrichtung erstreckt. Das Antriebsteilgehäuse ist an den Rohrabschnitt angepasst, so dass dieser zumindest teilweise über einen Umfangsabschnitt seines Außenumfangs aufgenommen ist. Beispielsweise kann der Rohrabschnitt zylindrisch ausgebildet sein, und das Antriebsteilgehäuse einen im Durchmesser korrespondierenden hohlzylindrischen Verbindungsabschnitt aufweisen, so dass eine Art rinnenförmiger, im Umfangsquerschnitt maximal halbkreisförmiger Verbindungsabschnitt gebildet wird, in dem der Rohrabschnitt formschlüssig aufnehmbar ist. Durch den Formschluss kann eine definierte Ausrichtung der beiden Teilgehäuse bezüglich der Getriebeachse erfolgen, während der Abstand radial zur Getriebeachse frei vorgegeben werden kann, wodurch erfindungsgemäß der relative Abstand zwischen Antriebs- und Getriebeachse zum Ausgleich von Toleranzen individuell eingestellt werden kann. In der optimalen Position, in der sich Antriebs- und Getrieberad in optimalem Wirkeingriff befinden, wird das auf dem Rohrabschnitt sitzende Antriebsteilgehäuse durch Erzeugung der Fügeverbindung zwischen den Teilgehäusen fixiert.

Es wird ein modularer Aufbau des Getriebes vorgeschlagen, bei dem die Antriebsbaugruppe und die Getriebebaugruppe funktionale Module bilden, die zur Erzeugung des Wirkeingriffs von Antriebsrad und Getrieberad zusammengefügt werden. Ein besonderer Vorteil ergibt sich daraus, dass die beiden Baugruppen - Antriebsbaugruppe und Getriebebaugruppe - zunächst separat gefertigt und bereitgestellt werden können. Die separat vorliegenden Baugruppen sind ausgestaltet, dass die miteinander gefügt werden können, und zu diesem Zweck beispielsweise miteinander korrespondierende Fügeelemente aufweisen, beispielsweise Fügeflächen. Anschließend werden die Baugruppen zur Bildung des Getriebes miteinander verbunden. Dabei werden die Baugruppen zunächst relativ zueinander positioniert, so dass das Antriebsrad der Antriebsbaugruppe in Wirkeingriff kommt mit dem Getrieberad der Getriebebaugruppe. Während dieser Positionierung erfolgt eine optimierte Orientierung und Ausrichtung, so dass die Getriebeglieder Antriebsrad und Getrieberad unter Ausgleich von fertigungsbedingten Maßtoleranzen miteinander in Eingriff gebracht werden. Dadurch, dass diese Positionierung der Getriebeglieder für jedes einzelne Getriebe individuell erfolgen kann, ist es möglich, selbst geringste Abweichungen von Maß- und/oder Orientierung der Getriebeglieder und deren Lagerungen zu berücksichtigen und auszugleichen. Wenn die optimale Ausrichtung erfolgt ist, werden Antriebsbaugruppe und Getriebebaugruppe durch die Fügeverbindung positionsgenau miteinander fixiert.

Ein besonderer Vorteil eines erfindungsgemäß aus modulartigen Baugruppen erzeugten Getriebes ist, dass selbst geringste Maßabweichungen, die insbesondere beim Wirkeingriff von Getrieberädern zu unerwünschter Geräuschbildung und erhöhtem Verschleiß führen können, während der Fertigung des Getriebes bei der Erzeugung der Fügeverbindung wirksam kompensiert werden können. Dadurch können eine verbesserte Laufruhe und ein verringerter Verschleiß erreicht werden. Ein weiterer Vorteil ist, dass die Toleranzanforderungen an die einzelnen Getriebeglieder - Antriebsrad, Getrieberad und deren Lagerungen - geringer ausfallen können. Im Ergebnis hat ein erfindungsgemäß aus gefügten modulartigen Baugruppen gebautes Getriebe bessere Betriebseigenschaften als konventionelle, integrierte Getriebe, und erfordert einen geringeren Fertigungs- und Montageaufwand.

Es ist möglich, dass die Antriebsbaugruppe ein Antriebsteilgehäuse aufweist, in der das Antriebsrad gelagert ist, und die Getriebebaugruppe ein Getriebeteilgehäuse aufweist, in der das Getrieberad gelagert ist, und das Antriebsteilgehäuse mit dem Getriebeteilgehäuse über die Fügeverbindung verbunden ist. Die beiden Teilgehäuse - Antriebsteilgehäuse und Getriebeteilgehäuse - weisen jeweils zumindest ein Getriebeglied - Antriebsrad oder Getrieberad - und deren jeweilige Lager zur drehbaren Lagerung um die Antriebs- oder Getriebeachse auf. Durch entsprechende, miteinander korrespondierende Ausnehmungen oder Öffnungen in den Teilgehäusen können Antriebs- und Getrieberad miteinander in Wirkeingriff gebracht werden, beispielsweise durch den gegenseitigen Eingriff von Verzahnungen. Auf diese Weise ist es möglich, die durch die Lager definierten Antriebs- und Getriebeachsen durch relative Positionierung von Antriebs- und Getriebeteilgehäuse für jedes einzelne Getriebe individuell relativ zueinander zu orientieren und im optimalen Achsabstand anzuordnen, so dass der Wirkeingriff von Antriebsrad und Getrieberad optimiert wird. Nach dem Fügen der Teilgehäuse sind Antriebs- und Getrieberad positionsfest fixiert, so dass der optimierte Wirkeingriff der Getriebeglieder über die Betriebsdauer des Getriebes sichergestellt ist.

Die Teilgehäuse mit den darin angeordneten Lagern und Getriebegliedern können als modulartige Baueinheiten gefertigt und bereitgestellt werden, welche zumindest teilweise die Antriebsbaugruppe und die Getriebebaugruppe bilden. Beispielsweise kann ein Antriebsteilgehäuse ein Antriebsrad, beispielsweise in Form einer Schnecke, und ein Antriebsradlager aufweisen, und ein Getriebeteilgehäuse ein Getrieberad, beispielsweise in Form eines Schneckenrads, und ein Getrieberadlager aufweisen. Durch das positionsgenaue Fügen von Antriebs- und Getriebeteilgehäuse zur Bildung des Getriebegehäuses sind das Antriebs- und das Getrieberad optimal im Wirkeingriff zueinander ausgerichtet.

Um die Wirkverbindung zwischen den Getriebegliedern beim Verbinden der Teilgehäuse zu erzeugen, kann vorgesehen sein, dass das Antriebsteilgehäuse im Bereich des Antriebsrads und das Getriebeteilgehäuse im Bereich des Getrieberads einen offenen Eingriffsbereich aufweisen, wobei das Antriebsrad und das Getrieberad durch den Eingriffsbereich hindurch miteinander in Wirkeingriff stehen. Das Antriebsteilgehäuse hat einen zum Getriebeteilgehäuse hin offenen Eingriffsbereich und umgekehrt, d.h. im Eingriffsbereich besteht in zusammengefügten Zustand ein offener Durchgang zwischen den Teilgehäusen. Beispielsweise steht das als Schnecke ausgebildetes Antriebsrad im Eingriffsbereich aus dem Antriebsteilgehäuse vor und taucht durch den Eingriffsbereich in das Getriebeteilgehäuse ein, wo es mit der Verzahnung des als Schneckenrad ausgebildeten Getrieberads kämmt.

Es ist vorteilhaft, dass die Antriebsbaugruppe und die Getriebebaugruppe korrespondierende Fügeelemente aufweisen. An den Fügeelementen werden die Antriebsbaugruppe und die Getriebebaugruppe miteinander verbunden und gegenseitig fixiert. Die Fügeelemente können beispielsweise Formschlusselemente umfassen, welche eine eindeutige Orientierung der Baugruppen in einer oder mehreren Raumrichtungen ermöglichen. Weiterhin ist es vorteilhaft, dass die Fügeelemente Freiheitsgrade bezüglich der relativen Positionierung bieten, beispielsweise durch Führungsflächen und/oder -kanten, welche eine Führung oder Abstützung in mindestens einer Raumrichtung ermöglichen, während beispielsweise eine relative Verschiebung oder Verlagerung von Antriebs- und Getriebebaugruppe in mindestens einer anderen Raumrichtung möglich ist, um beispielsweise den Achsabstand zwischen Antriebs- und Getrieberad einzustellen.

Die Fügeelemente können hinsichtlich Anordnung, Formgebung, Material, Oberflächenstruktur und dergleichen für spezielle Arten von Fügeverbindungen ausgebildet sein. Beispielsweise können Schweißvorbereitungen mit Materialanordnungen zur optimierten Erzeugung einer Schweißverbindung vorgesehen sein, oder strukturierte Oberflächen zur Herstellung stoffschlüssiger Verbindungen mittels Kleben oder Löten, oder es können Aufnahmen für Verbindungselemente wie Schrauben, Nieten oder dergleichen vorgesehen sein. Vorzugsweise sind die Fügeelemente an dem Antriebsteilgehäuse und/oder dem Getriebeteilgehäuse angeordnet und ermöglichen das Positionieren und Zusammenfügen von Antriebs- und Getriebebaugruppe.

Die Fügeverbindung kenn eine formschlüssige und/oder kraftschlüssige und/oder stoffschlüssige Verbindung aufweisen. Es kann eine unlösbare Verbindung erfolgen, beispielsweise durch stoffschlüssig durch Schweißen, Ultraschallschweißen, Kleben, oder auch formschlüssig durch Nieten, Falzen, Bördeln, Durchsetzfügen oder Verstemmen. Zusätzlich oder alternativ kann eine lösbare Verbindung erfolgen, beispielsweise durch Schrauben.

Es kann vorgesehen sein, dass das Antriebsrad koaxial mit der Motorwelle eines Stellmotors gekuppelt ist und das Getrieberad mit einer Gewindespindel oder einer Spindelmutter verbunden ist. Das Antriebsrad kann beispielsweise auf der Motorwelle angeordnet sein, oder auf einer mit der Motorwelle gekuppelten Antriebswelle. Die Motorwelle oder die Antriebswelle kann motorseitig in dem Motor oder in mindestens einem Lager im Antriebsteilgehäuse gelagert sein, und an ihrem motorfernen Ende in einem Lager im Antriebsteilgehäuse, so dass eine definierte Orientierung in der Antriebsbaugruppe erfolgt.

Der Stellmotor kann positionsfest mit der Antriebsbaugruppe verbunden sein, bevorzugt indem der Stellmotor an dem Antriebsteilgehäuse angebracht ist, beispielsweise mittels einer Flanschverbindung.

Eine Ausführung der Erfindung sieht vor, dass die Antriebsachse und die Getriebeachse im Wesentlichen senkrecht zueinander stehen und einen Abstand voneinander haben, der durch den Achsabstand von Antriebsrad und Getrieberad im Wirkeingriff vorgegeben ist. Unter im Wesentlichen senkrecht ist eine Abweichung bis zu ±10° von einer idealen senkrechten Anordnung zu verstehen. Bei Zahnrädern ist dies die Summe der Teilkreisradien. Bei einer Ausführung als Schneckenradgetriebe bestimmt sich der Achsabstand aus dem Teilkreisradius des Schneckenrades und dem Mittenkreisradius der Schnecke. Dadurch, dass die Antriebsachse durch eine in der Antriebsbaugruppe angeordnete Lagerung und die Getriebeachse durch eine in der Getriebebaugruppe angeordnete Lagerung definiert sind, können durch die erfindungsgemäße Fügeverbindung der Baugruppen bei optimaler Ausrichtung Antriebsrad und Getrieberad in individuell optimiertem Wirkeingriff fixiert werden.

Die vorgenannte Ausführungsform kann dadurch realisiert werden, dass das Antriebsrad als Schnecke und das Getrieberad als Schneckenrad ausgebildet ist. Die Schnecke ist als Bestandteil der Antriebsbaugruppe bevorzugt in einem Antriebsteilgehäuse gelagert. Die Lagerung kann in mindestens einem in dem Antriebsteilgehäuse angeordneten Wellenlager erfolgen, und/oder in einem Motorlager des Stellmotors, der mit dem Antriebsteilgehäuse verbunden ist. Das Schneckenrad ist in dem Getriebeteilgehäuse gelagert. Das Antriebs- und Getriebeteilgehäuse haben korrespondierende Eingriffsöffnungen, durch die die Schnecke mit dem Schneckenrad in kämmenden Wirkeingriff gebracht werden können.

Die Erfindung umfasst eine Antriebseinheit für einen Verstellantrieb, mit einem Getriebe, in dem ein um eine Antriebsachse drehend antreibbares Antriebsrad gelagert ist, welches in Wirkeingriff steht mit einem Getrieberad, welches um eine Getriebeachse drehbar in dem Getriebe gelagert ist, wobei das Getriebe zusammengesetzt ist aus einer Antriebsbaugruppe, die das Antriebsrad aufweist, und einer Getriebebaugruppe, die das Getrieberad aufweist, wobei die Antriebsbaugruppe und die Getriebebaugruppe durch eine Fügeverbindung miteinander verbunden sind. Das Getriebeteilgehäuse weist erfindungsgemäß zumindest einen zur Getriebeachse koaxialen Rohrabschnitt auf, der zumindest über einen Umfangsteilbereich von dem Antriebsteilgehäuse umgriffen ist. Durch Verwendung einer derartigen Antriebseinheit bei einem Verstellantrieb wird die zugrunde liegende Aufgabe gelöst.

Die Antriebseinheit kann die vorangehend für die erfindungsgemäße Verstelleinheit beschriebenen Merkmale aufweisen.

Weiterhin betrifft die Erfindung eine motorisch verstellbare Lenksäule für ein Kraftfahrzeug, mit einer Trageinheit, die an einer Fahrzeugkarosserie anbringbar ist, und von der eine Stelleinheit gehalten ist, in der eine Lenkspindel um eine Längsachse drehbar gelagert ist, und mit einem Verstellantrieb, der mit der Trageinheit und mit der Stelleinheit verbunden ist, und von dem die Stelleinheit relativ zur Trageinheit verstellbar ist, wobei der Verstellantrieb eine in eine Spindelmutter eingreifende Gewindespindel aufweist, und wobei der Verstellantrieb eine Antriebseinheit aufweist mit einem Getriebe, in dem ein um eine Antriebsachse drehend antreibbares Antriebsrad gelagert ist, welches in Wirkeingriff steht mit einem Getrieberad, welches um eine Getriebeachse drehbar in dem Getriebe gelagert ist und mit der Gewindespindel oder der Spindelmutter verbunden ist, wobei das Getriebe zusammengesetzt ist aus einer Antriebsbaugruppe, die das Antriebsrad aufweist, und einer Getriebebaugruppe, die das Getrieberad aufweist, wobei die Antriebsbaugruppe und die Getriebebaugruppe durch eine Fügeverbindung miteinander verbunden sind. Erfindungsgemäß ist vorgesehen, dass das Getriebeteilgehäuse zumindest einen zur Getriebeachse koaxialen Rohrabschnitt aufweist, der zumindest über einen Umfangsteilbereich von dem Antriebsteilgehäuse umgriffen ist.

Der Verstellantrieb kann in Weiterbildungen der Erfindung ausgestaltet sein wie vorangehend beschrieben.

Ein erfindungsgemäßer Verstellantrieb für eine motorisch verstellbare Lenksäule für ein Kraftfahrzeug, kann in einem erfindungsgemäßen Verfahren mit den folgenden Schritten hergestellt werden:
- Bereitstellen einer Antriebsbaugruppe, die ein Antriebsteilgehäuse mit einem darin um eine Antriebsachse drehbar gelagerten Antriebsrad aufweist,
- Bereitstellen einer Getriebebaugruppe, die ein Getriebeteilgehäuse mit einem darin um eine Getriebeachse drehbar gelagerten Getrieberad aufweist,
- Positionieren von Antriebsbaugruppe und Getriebebaugruppe relativ zueinander in Eingriffsposition (Wirkposition), so dass das Antriebsrad und Getrieberad in Wirkeingriff gebracht werden,
- Fixieren/Zusammenfügen von Antriebsbaugruppe und Getriebebaugruppe in Eingriffsposition.

Eine Antriebsbaugruppe kann zunächst separat gefertigt werden, wobei das Antriebsrad, beispielsweise eine Schnecke, definiert positioniert ist, beispielsweise durch eine oder mehrere Lagerungen der Antriebswelle, hier der Schneckenwelle. Die Lagerung kann in dem Antriebsteilgehäuse erfolgen, bevorzugt vom Stellmotor aus gesehen am motorfernen Wellenende, und am motornahen Ende ebenfalls in einer Lagerung im Antriebsteilgehäuse, oder in einer Motorlagerung des Stellmotors, der an dem Antriebsteilgehäuse fixiert ist. Das Getrieberad ist um die Getriebeachse, welche mit der Gewindespindelachse zusammenfällt, drehbar in dem Getriebeteilgehäuse gelagert.

Im nächsten Fertigungsschritt werden das Antriebs- und das Getriebeteilgehäuse so relativ zueinander positioniert, dass das Antriebsrad und das Getrieberad miteinander in Wirkeingriff kommen, wobei in dem genannten Beispiel die Schnecke mit dem Schneckenrad kämmt. Dabei wird der Achsabstand von Antriebs- und Getriebeachse auf optimales Getriebespiel eingestellt, wobei Fertigungs- und Maßtoleranzen von Antriebs- und Getrieberad sowie der Lagerungen ausgeglichen werden können. Der Abstand kann beispielsweise optimiert werden, indem während der relativen Positionierung von Antriebs- und Getriebeteilgehäuse das Spiel zwischen den Zahnflanken überwacht wird, und/oder die Kraft auf den Zahneingriff in Richtung des Achsabstands gemessen wird. Dadurch erfolgt eine individuelle Positionierung des Antriebsrads zum Getrieberad für bei der Fertigung jedes einzelnen Getriebes, bei der individuelle Toleranzen berücksichtigt und kompensiert werden können. Ebenfalls ist es denkbar und möglich, bei der Positionierung des Antriebs- und des Getriebeteilgehäuses zueinander das Antriebsrad und Getrieberad anzutreiben und den Wirkungsgrad zu bestimmen, wobei die Positionierung eine optimale Position aufweist, wenn der Wirkungsgrad den höchsten Wert erreicht hat. In dieser Position werden dann das Antriebs- und das Getriebeteilgehäuse relativ zueinander fixiert. Weiterhin kann es zusätzlich oder alternativ vorgesehen sein, dass der Körperschall bei der Positionierung und dem Betrieb des Getriebes gemessen wird. Wenn der Körperschall unterhalb eines vorgegebenen Grenzwertes liegt, erfolgt die Fixierung Antriebs- und des Getriebeteilgehäuses zueinander. Somit kann ein besonders geräuscharmer Betrieb erreicht werden.

Wenn die optimale relative Positionierung von Antriebs- und Getrieberad ermittelt und eingestellt ist, werden in die Antriebs- und Getriebebaugruppe durch Erzeugen der Fügeverbindung zwischen Antriebs- und Getriebeteilgehäuse miteinander fixiert. Dadurch werden das Antriebsund Getrieberad in optimalem Achsabstand und entsprechend in optimalem Wirkeingriff fixiert. Dadurch ist ein geräusch- und verschleißarmer Lauf des Getriebes über seine Lebensdauer gewährleistet, ohne dass zusätzliche Einrichtungen zum Ausgleich von Maßtoleranzen erforderlich wären.

Die Fügeverbindung kann beispielsweise durch eine Verschweißung, beispielsweise als Ultraschallschweißverbindung, von korrespondierenden Fügelementen an Antriebs- und Getriebeteilgehäuse erfolgen. Dadurch wird eine unlösbare, stoffschlüssige Verbindung erzeugt. Die Erzeugung einer formschlüssigen, unlösbaren Verbindung kann auch durch Materialumformung erfolgen, beispielsweise durch Verprägen, Verstemmen, Verpressen, Falzen oder dergleichen. Alternativ oder zusätzlich können lösbare oder unlösbare Befestigungselemente zwischen Antriebs- und Getriebeteilgehäuse eingesetzt werden, beispielsweise Schrauben oder Nieten.

Durch das erfindungsgemäße Verfahren kann ein Verstellantrieb mit den vorangehend beschriebenen Merkmalen sowie eine Antriebseinheit für einen derartigen Verstellantrieb und eine Lenksäule umfassend mindestens einen derartigen Verstellantrieb hergestellt werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine weitere perspektivische Ansicht der erfindungsgemäßen Lenksäule gemäß Figur 1 aus einem anderen Betrachtungswinkel,
- Figur 3: eine Antriebseinheit eines Verstellantriebs der Lenksäule gemäß Figuren 1 und 2,
- Figur 4: die Antriebseinheit gemäß Figur 3 in auseinander gezogenem Zustand,
- Figur 5: einen Querschnitt durch eine Antriebseinheit gemäß Figur 2 in einer ersten Ausführungsform,
- Figur 6: einen Querschnitt durch eine Antriebseinheit gemäß Figur 2 in einer zweiten Ausführungsform,
- Figur 7: einen Querschnitt durch eine Antriebseinheit gemäß Figur 2 in einer dritten Ausführungsform,
- Figur 8: einen Querschnitt durch eine Antriebseinheit gemäß Figur 2 in einer vierten Ausführungsform,
- Figur 9: eine Seitenansicht der Antriebseinheit gemäß Figur 5 in einer ersten Variante,
- Figur 10: eine Seitenansicht der Antriebseinheit gemäß Figur 5 in einer zweiten Variante.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

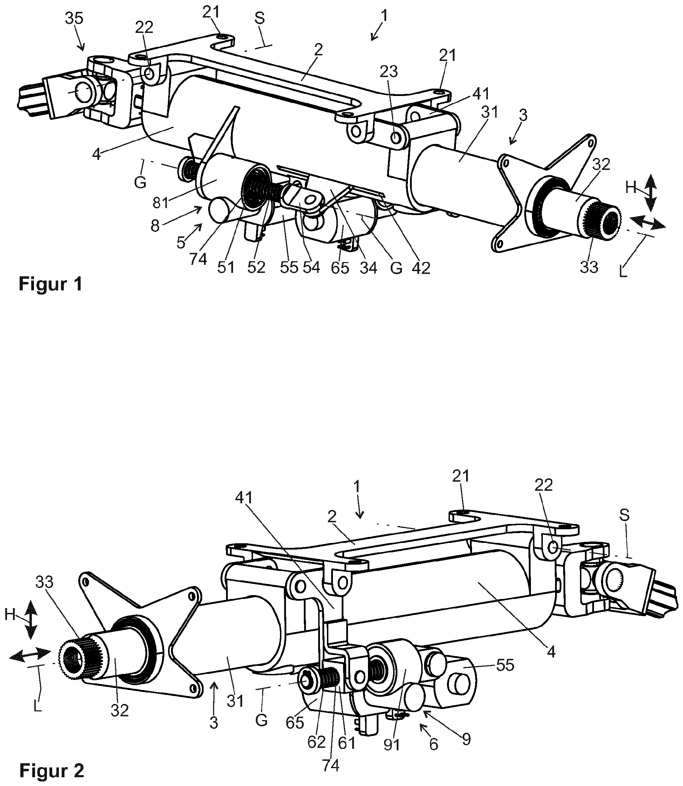

Figur 1 zeigt eine erfindungsgemäße Lenksäule 1 in einer schematischen perspektivischen Ansicht von oben rechts schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt die Lenksäule 1 in einer Ansicht von der gegenüberliegenden Seite, also von oben rechts gesehen.

Die Lenksäule 1 umfasst eine Trageinheit 2, welche als Konsole ausgebildet ist, die Befestigungsmittel 21 in Form von Befestigungsbohrungen aufweist zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet - aufgenommen ist.

Die Stelleinheit 3 weist ein Mantelrohr 31 auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist. Am vorderen Ende ist die Lenkspindel 32 mit einer Gabel eines Universalgelenks 35 drehmomentenschlüssig verbunden.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet.

Die Manteleinheit 4 ist in ihrem vorderen Endbereich um eine quer zur Längsachse L liegende, horizontale Schwenkachse S verschwenkbar in einem Schwenklager 22 an der Trageinheit 2 gelagert. Im hinteren Bereich ist die Manteleinheit 4 über einen drehbaren Stellhebel 41 mit der Trageinheit 2 verbunden. Durch eine Drehbewegung des Stellhebels 41 mittels eines dargestellten Stellantriebs 6 (siehe Figur 2) kann die Manteleinheit 4 relativ zur Trageinheit 2 um die im Einbauzustand waagerecht liegende Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

Ein erster Verstellantrieb 5 zur Längsverstellung der Stelleinheit 3 relativ zur Manteleinheit 4 in Richtung der Längsachse L weist einen Spindeltrieb mit einer Spindelmutter 51 mit einem Innengewinde 74 auf, in das eine sich längs einer Gewindespindelachse G erstreckende Gewindespindel 52 eingreift, also mit ihrem Außengewinde in das korrespondierende Innengewinde 74 der Spindelmutter 51 eingeschraubt ist. Die Gewindespindelachse G der Gewindespindel 52 verläuft im Wesentlichen parallel zur Längsachse L.

Die Spindelmutter 51 ist um die Gewindespindelachse G in einem Getriebe 8 drehbar in einem Getriebegehäuse 81gelagert, welches fest mit der Manteleinheit 4 verbunden ist. In Richtung der Gewindespindelachse G, die im Folgenden auch gleichbedeutend als Getriebeachse G bezeichnet wird, ist die Spindelmutter 51 axial über das Getriebegehäuse 81 an der Manteleinheit 4 abgestützt, wie weiter unten noch näher erläutert wird.

Die Gewindespindel 52 ist mit einem an ihrem hinteren Ende ausgebildeten Befestigungselement 54 über ein Übertragungselement 34 mit der Stelleinheit 3 verbunden, und zwar fest in Richtung der Gewindespindelachse G bzw. der Längsachse L und feststehend bezüglich Drehung um die Gewindespindelachse G. Durch die drehend antreibbare Spindelmutter 51 und die bezüglich Drehung feststehende Gewindespindel 52 wird ein sogenannter Tauchspindelantrieb realisiert.

Dass Übertragungselement 34 erstreckt sich von der Stelleinheit 3 durch eine schlitzförmige Durchgangsöffnung 42 in der Manteleinheit 4. Zur Verstellung der Lenksäule 1 in Längsrichtung kann das Übertragungselement 34 frei in der Durchgangsöffnung 42 in Längsrichtung entlangbewegt werden.

Der Verstellantrieb 5 weist einen elektrischen Stellmotor 55 auf, von dem die Spindelmutter 51 bezüglich der Gewindespindelachse G relativ zur feststehenden Gewindespindel 52 drehend antreibbar ist. Dadurch kann - je nach Drehrichtung des Stellmotors 55 - die Gewindespindel 52 in Richtung der Achse G translatorisch relativ zur Spindelmutter 51 verlagert werden, so dass entsprechend die mit der Gewindespindel 52 verbundene Stelleinrichtung 3 relativ zu der mit der Spindelmutter 51 verbundenen Manteleinheit 4 in Richtung der Längsachse L verstellt wird. Der Antrieb der Spindelmutter 51 wird weiter unten noch detailliert erläutert.

In Figur 2, welche eine perspektivische Ansicht der Lenksäule 1 von der in Figur 1 hinten liegenden Seite zeigt, ist erkennbar, wie ein zweiter Verstellantrieb 6 zur Verstellung in Höhenrichtung H an der Lenksäule 1 angebracht ist. Dieser Verstellantrieb 6 umfasst eine Spindelmutter 61, in deren Innengewinde 74 längs einer Gewindespindelachse G eine Gewindespindel 62 eingreift. Der Verstellantrieb weist ein Getriebe 9 auf, in dem die Gewindespindel 62 in einem Getriebegehäuse 91, welches an der Manteleinheit 4 befestigt ist, um die Gewindespindelachse G, die gleichbedeutend als Getriebeachse G bezeichnet wird, drehbar gelagert und axial, in Richtung der Gewindespindelachse G, an der Manteleinheit 4 abgestützt ist. Von einem elektrischen Stellmotor 65 ist die Gewindespindel 62 wahlweise in beide Rotationsrichtungen um die Gewindespindelachse G drehend antreibbar.

Die Spindelmutter 61 ist bezüglich einer Drehung um die Gewindespindelachse G feststehend an einem Ende des zweiarmigen Stellhebels 41 angebracht, der um ein Schwenklager 23 drehbar an der Trageinheit 22 gelagert ist, und dessen anderer Arm mit dem anderen Ende mit der Manteleinheit 4 verbunden ist.

Durch Drehung der Gewindespindel 61 kann - je nach Drehrichtung des Stellmotors 65 - die Spindelmutter 61 in Richtung der Gewindespindelachse G translatorisch relativ zur Gewindespindel 62 verlagert werden, so dass entsprechend die über den Stellhebel 41 mit der Spindelmutter 61 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet.

Durch die drehend antreibbare Gewindespindel 62 und die bezüglich Drehung feststehende Spindelmutter 61 wird ein sogenannter Rotationsspindelantrieb realisiert.

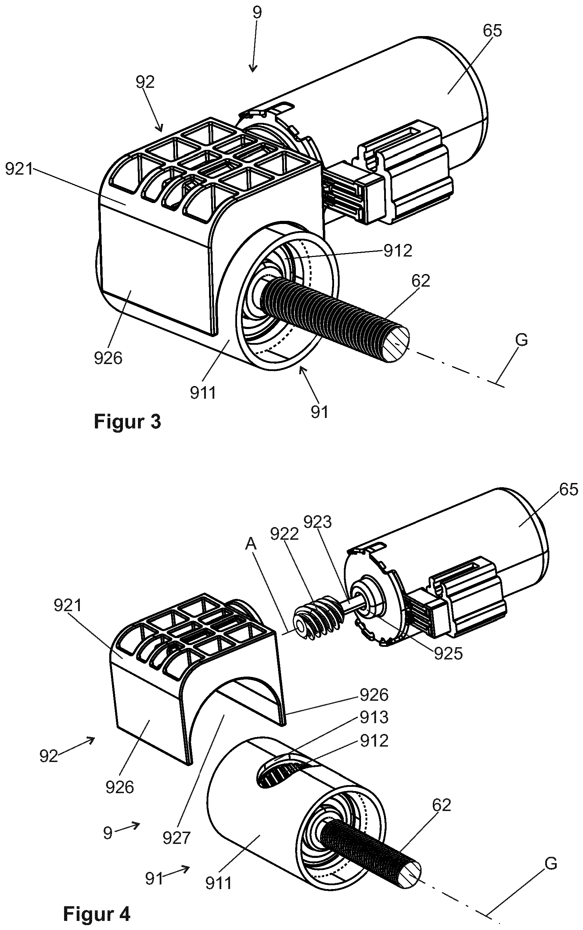

Die Erfindung bezieht sich auf die Ausbildung eines Getriebegehäuses 8 oder 9, wobei diese sich im Wesentlichen nur dadurch unterscheiden, dass in dem Getriebegehäuse 9 die Gewindespindel 52 um die jeweilige Gewindespindelachse G drehbar, in axialer Richtung fest gelagert ist, und in dem Getriebegehäuse 8 die Spindelmutter 61. Im Folgenden werden anhand der Figuren 3 bis 9 exemplarisch Ausführungen des Getriebegehäuses 9 des als Rotationsspindelantriebs ausgebildeten Verstellantriebs 6 erläutert, wobei die Merkmale auf die Ausgestaltung eines Getriebegehäuses 8 für einen als Tauchspindelantrieb ausgebildeten Verstellantrieb 5 dadurch übertragen werden können, dass anstatt der Gewindespindel 62 die Spindelmutter 51 drehend antreibbar angeordnet wird.

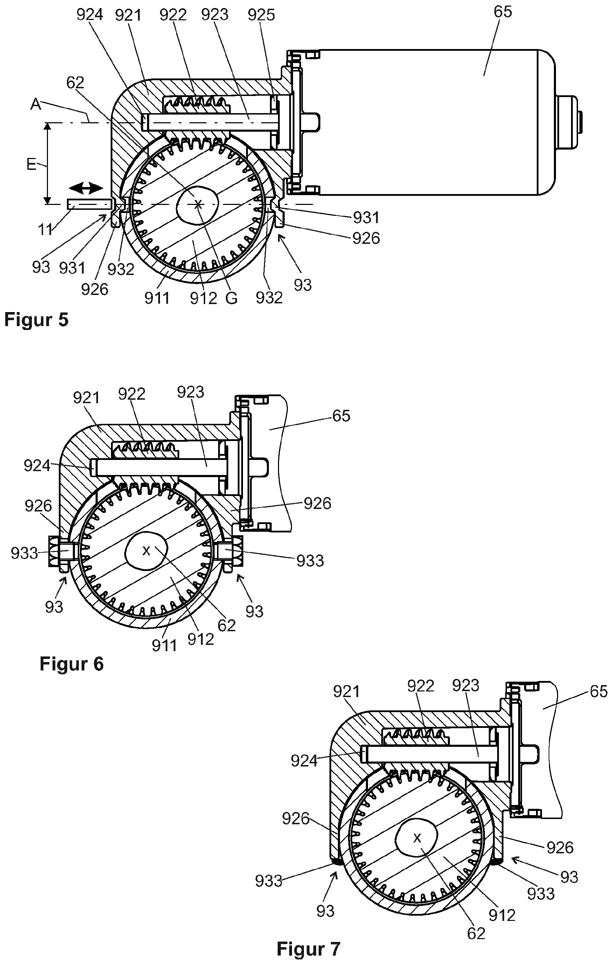

Figur 3 zeigt die von dem Verstellantrieb 6 gelöste Antriebseinheit in zusammengesetzten Zustand. In Figur 4 sind die wesentlichen Funktionsteile in einer Explosionsdarstellung auseinander gezogen gezeigt. Die Anordnung der im Folgenden näher erläuterten Einzelteile kann aus den Schnittdarstellungen in Figuren 5, 6 und 7 entnommen werden.

Das Getriebegehäuse 91 des Getriebes 9 ist erfindungsgemäß zusammengefügt aus einer Antriebsbaugruppe 92 und einer Getriebebaugruppe 91.

Die Antriebsbaugruppe 92 weist ein Antriebsteilgehäuse 921 auf, in der ein als Schnecke 922 ausgebildetes Antriebsrad drehbar gelagert ist, welche auf einer Antriebswelle 923 befestigt ist, die sich in Richtung einer Antriebsachse A erstreckt. Die Schnecke 922 ist bevorzugt mittels eines Querpressverbandes auf der Antriebswelle 923 befestigt. Dies bietet den Vorteil, dass keine hohen Aufpresskräfte wie bei einem Längspressverband erforderlich sind. Bevorzugt wird die Schnecke 922 vor der Fügeoperation induktiv erwärmt und dann unter geringer Kraftaufbringung auf die Antriebswelle 923 aufgeschoben, so dass die Schnecke 922 nach dem Erkalten auf der Antriebswelle 923 aufgeschrumpft ist. Die Antriebswelle 923 ist von dem Stellmotor 65 drehend antreibbar, wobei dessen Motorwelle die Antriebswelle 923 bilden kann oder zumindest drehmomentschlüssig mit dieser gekuppelt ist. Der Stellmotor 65 ist an das Antriebsteilgehäuse 921 angeflanscht und mit diesem verbunden, wobei die Antriebswelle 923 an ihrem motorfernen Ende in einem Lager 924 in dem Antriebsteilgehäuse 921 drehbar gelagert ist, und in ihrem motornahen Bereich in einem Motorlager 925, welches zusammen mit dem Stellmotor 65 ebenfalls in dem Antriebsteilgehäuse 921 fixiert ist.

Die Getriebebaugruppe 91 weist ein rohrförmiges Getriebeteilgehäuse 911 auf, welches hohlzylindrisch koaxial zur Getriebeachse G ausgebildet ist und in dem ein als Schneckenrad 912 ausgebildetes Getrieberad um die Getriebeachse G drehbar gelagert ist. Das Schneckenrad 912 ist mit der Gewindespindel 62 drehfest verbunden. Wie in Figur 4 erkennbar ist, weist das Getriebeteilgehäuse 911 im Bereich des Schneckenrads 912 eine Eingriffsöffnung 913 auf. Das Antriebsteilgehäuse 921 weist Befestigungsabschnitte 926 auf, die an einem zumindest teilweise hohlzylindrischen Aufnahmebereich 927 angeordnet sind und sich bezüglich der Getriebeachse G gegenüberliegen. Der Aufnahmebereich 927 hat in etwa die Form einer sich in Richtung der Getriebeachse G erstreckenden Rinne mit halbkreisförmigem offenem Querschnitt, der zur formschlüssigen Aufnahme des außen zylindrischen Getriebeteilgehäuses 911 ausgestaltet ist.

Zur Herstellung eines Getriebes 9 wird eine Antriebsbaugruppe 92 dadurch zur Verfügung gestellt, dass die Schnecke 922 in das Antriebsteilgehäuse 921 eingesetzt wird, wobei sie mit der Antriebswelle 923 in dem Lager 924 in dem Antriebsteilgehäuse 921 um die Antriebsachse A drehbar gelagert ist. Die Antriebswelle 923 ist mit der Motorwelle des Stellmotors 65 gekuppelt, der ebenfalls mit der Antriebsbaugruppe 92 verbunden ist.

Weiterhin wird eine Getriebebaugruppe 91 bereitgestellt, wobei in dem Getriebeteilgehäuse 911 das mit der Gewindespindel 62 verbundene Schneckenrad 912 um die Getriebeachse G, die identisch ist mit der Gewindespindelachse G, drehbar gelagert ist.

Die Antriebsbaugruppe 92 und die Getriebebaugruppe 91 werden so relativ zueinander positioniert, dass das Getriebeteilgehäuse 911 zwischen den Befestigungsabschnitten 926 des Antriebsteilgehäuses 921 aufgenommen ist. Das Getriebeteilgehäuse 911 wird nun quer zur Getriebeachse G relativ zum Antriebsteilgehäuse 921 positioniert, bis der Eingriffsabstand E, auch als Achsabstand E bezeichnet, zwischen der Antriebsachse A und der Getriebeachse G eingestellt ist, wobei die Schnecke 922 durch die Eingriffsöffnung 913 taucht (ragt) und in das Schneckenrad 912 eingreift, und die optimale Eingriffsposition von Schnecke 922 und Schneckenrad 912 erzeugt ist.

In der optimalen Eingriffsposition mit Achsabstand E wird die Antriebsbaugruppe 92 mit der Getriebebaugruppe 91 durch Erzeugung einer Fügeverbindung zwischen dem Antriebsteilgehäuse 921 und dem Getriebeteilgehäuse 911 fixiert.

In der in Figur 5 gezeigten Ausführung sind Fügeverbindungen 93 als Verstemmungen ausgebildet. Mittels eines dornförmigen Werkzeugs 11 wird zur Erzeugung einer Verstemmung jeweils eine Einprägung 931 von außen in den Befestigungsabschnitt 926 durch eine mit dem Doppelpfeil angedeutete Hubbewegung plastisch eingeformt. Die Einprägung 931 springt innen formschlüssig vor und greift in eine korrespondierende Ausnehmung 932 in der Außenseite des Getriebeteilgehäuses 911 formschlüssig ein. Dadurch, dass dieses Getriebeteilgehäuse 911 seinerseits formschlüssig zwischen den Befestigungsabschnitten 926 formschlüssig in dem konkaven Aufnahmebereich 927 des Antriebsteilgehäuses 921 aufgenommen ist, wird es durch die Einbringung der Einprägungen 931 dauerhaft formschlüssig fixiert. Dadurch ist der eingestellte Achsabstand E ebenfalls fixiert. Das Antriebsteilgehäuses 921 ist für die in Figur 5 dargestellte Ausführung bevorzugt aus einem metallischen Werkstoff beschaffen.

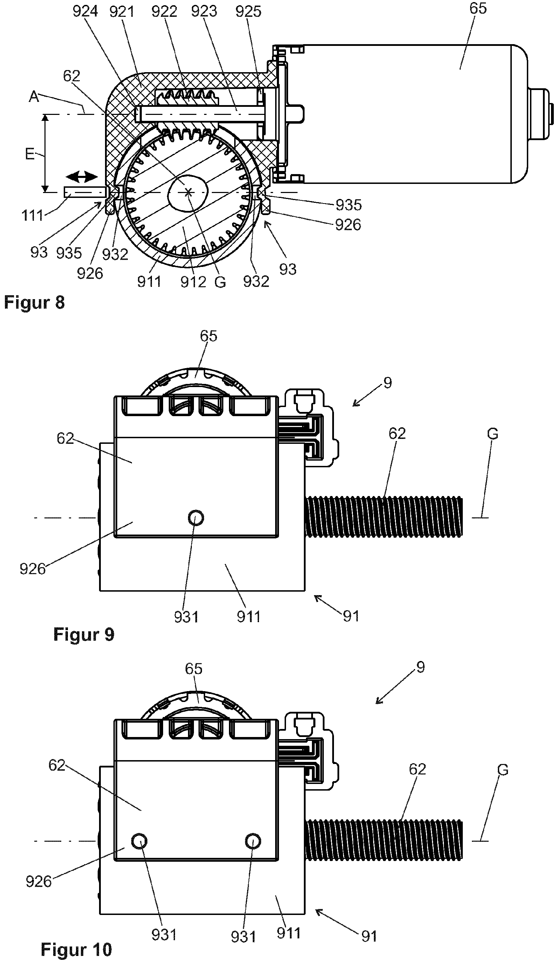

Figur 9 zeigt in einer Seitenansicht die Anordnung einer Einprägung 931 in einem Befestigungsabschnitt 926 des Antriebsteilgehäuses 921. Eine alternative Anordnung von mehreren Einprägungen 931 ist in Figur 10 gezeigt. Diese hat den weiteren Vorteil, dass gegebenenfalls eine zum Toleranzausgleich eingebrachte Verkippung der Getriebeachse G relativ zur Antriebsbaugruppe 92 eingestellt und fixiert werden kann.

Eine weitere Möglichkeit von Fügeverbindungen 93 ist in Figur 6 gezeigt. Darin ist das Antriebsteilgehäuse 921 mittels durch die Befestigungsabschnitte 926 hindurchgeführter Schrauben 933 mit dem Getriebeteilgehäuse 911 verbunden. Mittels der Schrauben 933 kann eine lösbare Verbindung gebildet werden, die beispielsweise eine Nachjustierung des Achsabstands E ermöglicht.

Wie in Figur 7 gezeigt, können die Fügeverbindungen 93 durch Schweißnähte 934 realisiert werden, die auch als Schweißpunkte ausgeführt sein können. Diese stoffschlüssige unlösbare Verbindung kann rationell gefertigt werden und ist präzise und sicher. Besonders rationell kann eine stoffschlüssige Verbindung mittels eines Laserschweißverfahrens erzeugt werden.

In der in Figur 8 gezeigten vierten Ausführung sind Fügeverbindungen 93 als Ultraschallverschweißung ausgebildet. Mittels einer Sonotrode 111 wird zur Erzeugung einer formschlüssigen Verbindung jeweils eine Einformung 935 von außen in den Befestigungsabschnitt 926 durch lokales thermisches Aufschmelzen des aus Kunststoff beschaffenen Antriebsteilgehäuses 921 eingeformt. Nach dem Erstarren des lokal aufgeschmolzenen Kunststoffes liegt eine formschlüssige Verbindung zwischen dem Getriebeteilgehäuse 911 und dem Antriebsteilgehäuse 921 vor. Die Einformung 935 springt innen formschlüssig vor und greift in eine korrespondierende Ausnehmung 932 in der Außenseite des Getriebeteilgehäuses 911 formschlüssig ein. Dadurch, dass dieses Getriebeteilgehäuse 911 seinerseits formschlüssig zwischen den Befestigungsabschnitten 926 formschlüssig in dem konkaven Aufnahmebereich 927 des Antriebsteilgehäuses 921 aufgenommen ist, wird es durch die Einbringung der Einformungen 935 dauerhaft formschlüssig fixiert. Dadurch ist der eingestellte Achsabstand E ebenfalls fixiert.

### Bezugszeichenliste

- 1: Lenksäule
- 11: Werkzeug
- 111: Sonotrode
- 2: Trageinheit
- 21: Befestigungsmittel
- 22, 23: Schwenklager
- 3: Stelleinheit
- 31: Mantelrohr
- 32: Lenkspindel
- 33: Befestigungsabschnitt
- 34: Übertragungselement
- 4: Manteleinheit
- 41: Stellhebel
- 42: Durchgangsöffnung
- 5,6: Verstellantrieb
- 51, 61: Spindelmutter
- 52, 62: Gewindespindel
- 54: Befestigungselement
- 55, 65: Stellmotor
- 56, 66: Schnecke
- 7: Getrieberad
- 71: Kernelement
- 72: Verzahnung (Schneckenverzahnung)
- 73: Verbindungsabschnitt
- 74: Innengewinde
- 8, 9: Getriebe
- 81, 91: Getriebegehäuse
- 91: Getriebebaugruppe
- 911: Getriebeteilgehäuse
- 912: Schneckenrad
- 913: Eingriffsöffnung
- 92: Antriebsbaugruppe
- 921: Antriebsteilgehäuse
- 922: Schnecke
- 923: Antriebswelle
- 924: Lager
- 925: Lager
- 926: Befestigungsabschnitte
- 927: Aufnahmebereich
- 93: Fügeverbindung
- 931: Einprägung
- 932: Ausnehmung
- 933: Schraube
- 934: Schweißnaht
- 935: Einformung

- L: Längsachse
- H: Höhenrichtung
- G: Gewindespindelachse (Getriebeachse)
- A: Antriebsachse
- E: Eingriffsabstand

## Patentansprüche

1. Verstellantrieb (5, 6) für eine motorisch verstellbare Lenksäule (1) für ein Kraftfahrzeug, umfassend eine Antriebseinheit mit einem Getriebe (8, 9), in dem ein um eine Antriebsachse (A) drehend antreibbares Antriebsrad (922) gelagert ist, welches in Wirkeingriff steht mit einem Getrieberad (912), welches um eine Getriebeachse (G) drehbar in dem Getriebe (8, 9) gelagert ist,
wobei das Getriebe (8, 9) zusammengesetzt ist aus einer Antriebsbaugruppe (92), die das Antriebsrad (922) aufweist, und einer Getriebebaugruppe (91), die das Getrieberad (912) aufweist, wobei die Antriebsbaugruppe (92) und die Getriebebaugruppe (91) durch eine Fügeverbindung (93) miteinander verbunden sind,
**dadurch gekennzeichnet,**
**dass** das Getriebeteilgehäuse (911) zumindest einen zur Getriebeachse (G) koaxialen Rohrabschnitt aufweist, der zumindest über einen Umfangsteilbereich von dem Antriebsteilgehäuse (921) umgriffen ist.

2. Verstellantrieb (5, 6) nach Anspruch 1, **dadurch gekennzeichnet, dass** die Antriebsbaugruppe (92) ein Antriebsteilgehäuse (921) aufweist, in der das Antriebsrad (922) gelagert ist, und die Getriebebaugruppe (91) ein Getriebeteilgehäuse (911) aufweist, in der das Getrieberad (912) gelagert ist, und das Antriebsteilgehäuse (921) mit dem Getriebeteilgehäuse (911) über die Fügeverbindung (93) verbunden ist.

3. Verstellantrieb (5, 6) nach Anspruch 2, **dadurch gekennzeichnet, dass** das Antriebsteilgehäuse (921) im Bereich des Antriebsrads (922) und das Getriebeteilgehäuse (911) im Bereich des Getrieberads (912) einen offenen Eingriffsbereich (913) aufweisen, wobei das Antriebsrad (922) und das Getrieberad (912) durch den Eingriffsbereich (913) hindurch miteinander in Wirkeingriff stehen.

4. Verstellantrieb (5, 6) nach einem der vorangehenden Ansprüche, **dadurch gekennzeichnet, dass** die Antriebsbaugruppe (92) und die Getriebebaugruppe (91) korrespondierende Fügeelemente (926) aufweisen.

5. Verstellantrieb (5, 6) nach einem der vorangehenden Ansprüche, **dadurch gekennzeichnet, dass** die Fügeverbindung (93) eine formschlüssige und/oder kraftschlüssige und/oder stoffschlüssige Verbindung aufweist.

6. Verstellantrieb (5, 6) nach einem der vorangehenden Ansprüche, **dadurch gekennzeichnet, dass** das Antriebsrad (922) koaxial mit der Motorwelle eines Stellmotors (65) gekuppelt ist, und das Getrieberad (912) mit einer Gewindespindel (62) oder einer Spindelmutter (51) verbunden ist.

7. Verstellantrieb (5, 6) nach Anspruch 6, **dadurch gekennzeichnet, dass** der Stellmotor (65) an dem Antriebsteilgehäuse (921) angebracht ist.

8. Verstellantrieb (5, 6) nach einem der vorangehenden Ansprüche, **dadurch gekennzeichnet, dass** die Antriebsachse (A) und die Getriebeachse (G) senkrecht zueinander stehen und einen Abstand (E) voneinander haben, der durch den Achsabstand (E) von Antriebsrad (922) und Getrieberad (912) im Wirkeingriff vorgegeben ist.

9. Verstellantrieb (5, 6) nach einem der vorangehenden Ansprüche, **dadurch gekennzeichnet, dass** das Antriebsrad (922) als Schnecke und das Getrieberad (912) als Schneckenrad ausgebildet ist.

10. Antriebseinheit für einen Verstellantrieb (5, 6), mit einem Getriebe (8, 9), in dem ein um eine Antriebsachse (A) drehend antreibbares Antriebsrad (922) gelagert ist, welches in Wirkeingriff steht mit einem Getrieberad (912), welches um eine Getriebeachse (G) drehbar in dem Getriebe (8, 9) gelagert ist,
wobei das Getriebe (8, 9) zusammengesetzt ist aus einer Antriebsbaugruppe (92), die das Antriebsrad (922) aufweist, und einer Getriebebaugruppe (91), die das Getrieberad (912) aufweist, wobei die Antriebsbaugruppe (92) und die Getriebebaugruppe (91) durch eine Fügeverbindung (93) miteinander verbunden sind,
**dadurch gekennzeichnet,**
**dass** das Getriebeteilgehäuse (911) zumindest einen zur Getriebeachse (G) koaxialen Rohrabschnitt aufweist, der zumindest über einen Umfangsteilbereich von dem Antriebsteilgehäuse (921) umgriffen ist.

11. Motorisch verstellbare Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (32) um eine Längsachse (L) drehbar gelagert ist, und mit einem Verstellantrieb (5, 6), der mit der Trageinheit (2) und mit der Stelleinheit (3) verbunden ist, und von dem die Stelleinheit (3) relativ zur Trageinheit (2) verstellbar ist, wobei der Verstellantrieb (5, 6) eine in eine Spindelmutter (51) eingreifende Gewindespindel (52, 62) aufweist,
und wobei der Verstellantrieb (5, 6) eine Antriebseinheit aufweist mit einem Getriebe (8, 9), in dem ein um eine Antriebsachse (A) drehend antreibbares Antriebsrad (922) gelagert ist, welches in Wirkeingriff steht mit einem Getrieberad (912), welches um eine Getriebeachse (G) drehbar in dem Getriebe (8, 9) gelagert ist und mit der Gewindespindel (52, 62) oder der Spindelmutter (51, 61) verbunden ist,
wobei das Getriebe (8, 9) zusammengesetzt ist aus einer Antriebsbaugruppe (92), die das Antriebsrad (922) aufweist, und einer Getriebebaugruppe (91), die das Getrieberad (912) aufweist, wobei die Antriebsbaugruppe (92) und die Getriebebaugruppe (91) durch eine Fügeverbindung (93) miteinander verbunden sind,
**dadurch gekennzeichnet,**
**dass** das Getriebeteilgehäuse (911) zumindest einen zur Getriebeachse (G) koaxialen Rohrabschnitt aufweist, der zumindest über einen Umfangsteilbereich von dem Antriebsteilgehäuse (921) umgriffen ist.

12. Verfahren zur Herstellung eines Verstellantriebs (5, 6) nach einem der Ansprüche 1 bis 9 für eine motorisch verstellbare Lenksäule (1) für ein Kraftfahrzeug, mit den Schritten:
- Bereitstellen einer Antriebsbaugruppe (92), die ein Antriebsteilgehäuse (921) mit einem darin um eine Antriebsachse (A) drehbar gelagerten Antriebsrad (922) aufweist,
- Bereitstellen einer Getriebebaugruppe (91), die ein Getriebeteilgehäuse (911) mit einem darin um eine Getriebeachse (G) drehbar gelagerten Getrieberad (912) aufweist,
- Positionieren von Antriebsbaugruppe (92) und Getriebebaugruppe (91) relativ zueinander in Eingriffsposition, so dass das Antriebsrad (922) und Getrieberad (912) in Wirkeingriff gebracht werden,
- Fixieren von Antriebsbaugruppe (92) und Getriebebaugruppe (91) in Eingriffsposition.

13. Verfahren nach Anspruch 12, **dadurch gekennzeichnet, dass** zum Fixieren von Antriebsbaugruppe (92) und Getriebebaugruppe (91) eine Fügeverbindung (93) des Antriebsteilgehäuses (92) mit dem Getriebeteilgehäuse (91) erzeugt wird.

## Claims

1. An adjustment drive (5, 6) for a motor-adjustable steering column (1) for a motor vehicle, comprising a drive unit having a transmission (8, 9) in which there is mounted a drive wheel (922) which can be driven to rotate about a drive axis (A) and which is in operative engagement with a transmission wheel (912) which is mounted in the transmission (8, 9) so as to be rotatable about a transmission axis (G),
wherein the transmission (8, 9) is composed of a drive module (92), which comprises the drive wheel (922), and of a transmission module (91), which comprises the transmission wheel (912), wherein the drive module (92) and the transmission module (91) are connected to one another by a joining connection (93), **characterized in that** the transmission part housing (911) comprises at least one tubular portion which is coaxial to the transmission axis (G) and which is encompassed by the drive part housing (921) at least over a circumferential subregion.

2. The adjustment drive (5, 6) as claimed in claim 1, **characterized in that** the drive module (92) comprises a drive part housing (921) in which the drive wheel (922) is mounted, and the transmission module (91) comprises a transmission part housing (911) in which the transmission wheel (912) is mounted, and the drive part housing (921) is connected to the transmission part housing (911) via the joining connection (93).

3. The adjustment drive (5, 6) as claimed in claim 2, **characterized in that** the drive part housing (921) comprises, in the region of the drive wheel (922), and the transmission part housing (911) comprises, in the region of the transmission wheel (912), an open engagement region (913), wherein the drive wheel (922) and the transmission wheel (912) are in operative engagement with one another through the engagement region (913).

4. The adjustment drive (5, 6) as claimed in one of the preceding claims, **characterized in that** the drive module (92) and the transmission module (91) comprise corresponding joining elements (926).

5. The adjustment drive (5, 6) as claimed in one of the preceding claims, **characterized in that** the joining connection (93) comprises a form-fitting and/or force-fitting and/or integrally bonded connection.

6. The adjustment drive (5, 6) as claimed in one of the preceding claims, **characterized in that** the drive wheel (922) is coupled coaxially to the motor shaft of an actuating motor (65), and the transmission wheel (912) is connected to a threaded spindle (62) or a spindle nut (51).

7. The adjustment drive (5, 6) as claimed in claim 6, **characterized in that** the actuating motor (65) is attached to the drive part housing (921).

8. The adjustment drive (5, 6) as claimed in one of the preceding claims, **characterized in that** the drive axis (A) and the transmission axis (G) are perpendicular to one another and have a distance (E) from one another which is determined by the axis distance (E) between drive wheel (922) and transmission wheel (912) in operative engagement.

9. The adjustment drive (5, 6) as claimed in one of the preceding claims, **characterized in that** the drive wheel (922) is designed as a worm and the transmission wheel (912) is designed as a worm wheel.

10. A drive unit for an adjustment drive (5, 6), having a transmission (8, 9) in which there is mounted a drive wheel (922) which can be driven to rotate about a drive axis (A) and which is in operative engagement with a transmission wheel (912) which is mounted in the transmission (8, 9) so as to be rotatable about a transmission axis (G),
wherein the transmission (8, 9) is composed of a drive module (92), which comprises the drive wheel (922), and of a transmission module (91), which comprises the transmission wheel (912), wherein the drive module (92) and the transmission module (91) are connected to one another by a joining connection (93), **characterized in that** the transmission part housing (911) comprises at least one tubular portion which is coaxial to the transmission axis (G) and which is encompassed by the drive part housing (921) at least over a circumferential subregion.

11. A motor-adjustable steering column (1) for a motor vehicle, having a carrying unit (2) which can be attached to a vehicle body and by which there is held an actuating unit (3) in which a steering spindle (32) is mounted so as to be rotatable about a longitudinal axis (L), and having an adjustment drive (5, 6) which is connected to the carrying unit (2) and to the actuating unit (3) and by which the actuating unit (3) is adjustable relative to the carrying unit (2), wherein the adjustment drive (5, 6) comprises a threaded spindle (52, 62) which engages in a spindle nut (51),
and wherein the adjustment drive (5, 6) comprises a drive unit having a transmission (8, 9) in which there is mounted a drive wheel (922) which can be driven to rotate about a drive axis (A) and which is in operative engagement with a transmission wheel (912) which is mounted in the transmission (8, 9) so as to be rotatable about a transmission axis (G) and is connected to the threaded spindle (52, 62) or the spindle nut (51, 61), wherein the transmission (8, 9) is composed of a drive module (92), which comprises the drive wheel (922), and of a transmission module (91), which comprises the transmission wheel (912), wherein the drive module (92) and the transmission module (91) are connected to one another by a joining connection (93), **characterized in that** the transmission part housing (911) comprises at least one tubular portion which is coaxial to the transmission axis (G) and which is encompassed by the drive part housing (921) at least over a circumferential subregion.

12. A method for producing an adjustment drive (5, 6) according to one of the claims 1 to 9 for a motor-adjustable steering column (1) for a motor vehicle, comprising the following steps:
- providing a drive module (92) which comprises a drive part housing (921) having a drive wheel (922) which is mounted therein so as to be rotatable about a drive axis (A),
- providing a transmission module (91) which comprises a transmission part housing (911) having a transmission wheel (912) which is mounted therein so as to be rotatable about a transmission axis (G),
- positioning the drive module (92) and transmission module (91) relative to one another in an engagement position such that the drive wheel (922) and transmission wheel (912) are brought into operative engagement,
- fixing the drive module (92) and transmission module (91) in the engagement position.

13. The method as claimed in claim 12, **characterized in that** a joining connection (93) between the drive part housing (92) and the transmission part housing (91) is produced in order to fix the drive module (92) and transmission module (91).

## Revendications

1. Entraînement de réglage (5, 6) pour une colonne de direction (1) à réglage motorisé pour un véhicule automobile, comprenant une unité d'entraînement dotée d'une transmission (8, 9) dans laquelle est montée une roue d'entraînement (922) pouvant être entraînée en rotation autour d'un axe d'entraînement (A), laquelle roue d'entraînement est en prise fonctionnelle avec une roue de transmission (912), laquelle est montée dans la transmission (8, 9) de manière rotative autour d'un axe de transmission (G),
la transmission (8, 9) étant composée d'un module d'entraînement (92) qui présente la roue d'entraînement (922) et d'un module de transmission (91) qui présente la roue de transmission (912), le module d'entraînement (92) et le module de transmission (91) étant reliés l'un à l'autre au moyen d'une liaison par assemblage (93),
**caractérisé en ce que**
le boîtier partiel de transmission (911) présente au moins une partie tubulaire coaxiale à l'axe de transmission (G), partie tubulaire autour de laquelle vient en prise le boîtier partiel d'entraînement (921) au moins sur une région partielle périphérique.

2. Entraînement de réglage (5, 6) selon la revendication 1, **caractérisé en ce que** le module d'entraînement (92) présente un boîtier partiel d'entraînement (921) dans lequel la roue d'entraînement (922) est montée, et le module de transmission (91) présente un boîtier partiel de transmission (911) dans lequel la roue de transmission (912) est montée, et le boîtier partiel d'entraînement (921) est relié au boîtier partiel de transmission (911) par le biais de la liaison par assemblage (93).

3. Entraînement de réglage (5, 6) selon la revendication 2, **caractérisé en ce que** le boîtier partiel d'entraînement (921), dans la région de la roue d'entraînement (922), et le boîtier partiel de transmission (911), dans la région de la roue de transmission (912), présentent une région d'entrée en prise (913) ouverte, la roue d'entraînement (922) et la roue de transmission (912) étant en prise fonctionnelle l'une avec l'autre à travers la région d'entrée en prise (913) .

4. Entraînement de réglage (5, 6) selon l'une des revendications précédentes, **caractérisé en ce que** le module d'entraînement (92) et le module de transmission (91) présentent des éléments d'assemblage (926) correspondants.

5. Entraînement de réglage (5, 6) selon l'une des revendications précédentes, **caractérisé en ce que** la liaison par assemblage (93) présente une liaison d'engagement par complémentarité de formes et/ou d'engagement par force et/ou de matière.

6. Entraînement de réglage (5, 6) selon l'une des revendications précédentes, **caractérisé en ce que** la roue d'entraînement (922) est accouplée coaxialement à l'arbre d'un moteur de réglage (65), et la roue de transmission (912) est reliée à une broche filetée (62) ou à un écrou de broche (51).

7. Entraînement de réglage (5, 6) selon la revendication 6, **caractérisé en ce que** le moteur de réglage (65) est attaché au boîtier partiel d'entraînement (921).

8. Entraînement de réglage (5, 6) selon l'une des revendications précédentes, **caractérisé en ce que** l'axe d'entraînement (A) et l'axe de transmission (G) sont perpendiculaires l'un à l'autre et sont situés à une distance (E) l'un de l'autre, laquelle est prédéfinie par l'entraxe (E) entre la roue d'entraînement (922) et la roue de transmission (912) en prise fonctionnelle.

9. Entraînement de réglage (5, 6) selon l'une des revendications précédentes, **caractérisé en ce que** la roue d'entraînement (922) est réalisée sous forme de vis sans fin et la roue de transmission (912) est réalisée sous forme de roue à vis sans fin.

10. Unité d'entraînement pour un entraînement de réglage (5, 6), comprenant une transmission (8, 9) dans laquelle est montée une roue d'entraînement (922) pouvant être entraînée en rotation autour d'un axe d'entraînement (A), laquelle roue d'entraînement est en prise fonctionnelle avec une roue de transmission (912), laquelle est montée dans la transmission (8, 9) de manière rotative autour d'un axe de transmission (G),
la transmission (8, 9) étant composée d'un module entraînement (92) qui présente la roue d'entraînement (922) et d'un module de transmission (91) qui présente la roue de transmission (912), le module d'entraînement (92) et le module de transmission (91) étant reliés l'un à l'autre au moyen d'une liaison par assemblage (93),
**caractérisée en ce que**
le boîtier partiel de transmission (911) présente au moins une partie tubulaire coaxiale à l'axe de transmission (G), partie tubulaire autour de laquelle vient en prise le boîtier partiel d'entraînement (921) au moins sur une région partielle périphérique.

11. Colonne de direction (1) à réglage motorisé pour un véhicule automobile, comportant une unité porteuse (2) qui peut être attachée à une carrosserie de véhicule, et par laquelle une unité de réglage (3) est retenue, dans laquelle un arbre de direction (32) est monté rotatif autour d'un axe longitudinal (L), et comportant un entraînement de réglage (5, 6) qui est relié à l'unité porteuse (2) et à l'unité de réglage (3), et par lequel l'unité de réglage (3) peut être réglée par rapport à l'unité porteuse (2), l'entraînement de réglage (5, 6) présentant une broche filetée (52, 62) venant en prise dans un écrou de broche (51),
et l'entraînement de réglage (5, 6) présentant une unité d'entraînement dotée d'une transmission (8, 9) dans laquelle est montée une roue d'entraînement (922) pouvant être entraînée en rotation autour d'un axe d'entraînement (A), laquelle roue d'entraînement est en prise fonctionnelle avec une roue de transmission (912), laquelle est montée dans la transmission (8, 9) de manière rotative autour d'un axe de transmission (G) et est reliée à la broche filetée (52, 62) ou à l'écrou de broche (51, 61),
la transmission (8, 9) étant composée d'un module entraînement (92) qui présente la roue d'entraînement (922) et d'un module de transmission (91) qui présente la roue de transmission (912), le module d'entraînement (92) et le module de transmission (91) étant reliés l'un à l'autre au moyen d'une liaison par assemblage (93),
**caractérisée en ce que**
le boîtier partiel de transmission (911) présente au moins une partie tubulaire coaxiale à l'axe de transmission (G), partie tubulaire autour de laquelle vient en prise le boîtier partiel d'entraînement (921) au moins sur une région partielle périphérique.

12. Procédé de fabrication d'un entraînement de réglage (5, 6) selon l'une des revendications 1 à 9 pour une colonne de direction (1) à réglage motorisé pour un véhicule automobile, comprenant les étapes suivantes :
- fourniture d'un module entraînement (92) qui présente un boîtier partiel d'entraînement (921) doté d'une roue d'entraînement (922) montée rotative dans celui-ci autour d'un axe d'entraînement (A),
- fourniture d'un module de transmission (91) qui présente un boîtier partiel de transmission (911) doté d'une roue de transmission (912) montée rotative dans celui-ci autour d'un axe de transmission (G),
- positionnement du module d'entraînement (92) et du module de transmission (91) l'un par rapport à l'autre dans une position d'entrée en prise, de sorte que la roue d'entraînement (922) et la roue de transmission (912) soient amenées en prise fonctionnelle,
- fixation du module d'entraînement (92) et du module de transmission (91) dans la position d'entrée en prise.

13. Procédé selon la revendication 12, **caractérisé en ce que**, pour la fixation du module d'entraînement (92) et du module de transmission (91), une liaison par assemblage (93) du boîtier partiel d'entraînement (92) au boîtier partiel de transmission (91) est produite.
